# FASCICULE DE BREVET EUROPEEN

(11) **EP 2 234 944 B1**
(45) Date de publication et mention de la délivrance du brevet: **31.08.2011**
(21) Numéro de dépôt: 08864507.2
(22) Date de dépôt: 12.12.2008
(51) Int. Cl.: C04B 41/87, C04B 35/653, C04B 35/56, C04B 35/565, C04B 41/49, B22F 3/11

(54) **PROCEDE DE REALISATION D'UNE COUCHE DE CARBURE REFRACTAIRE SUR UNE PIECE EN MATERIAU COMPOSITE C/C**
VERFAHREN ZUR BILDUNG EINER REFRAKTÄREN CARBIDSCHICHT AUF EINEM TEIL AUS C/C-VERBUND
METHOD FOR MAKING A REFRACTORY CARBIDE LAYER ON A PART MADE OF C/C COMPOSITE MATERIAL

(30) Priorité: 13.12.2007 FR 0759802
(43) Date de publication de la demande: 06.10.2010
(73) Titulaire: Snecma Propulsion Solide, 33187 Le Haillan Cedex (FR); Centre National de la Recherche Scientifique, 75016 Paris (FR)
(72) Inventeur: THEBAULT, Jacques, F-33000 Bordeaux (FR); ROBIN-BROSSE, Christian, F-33185 Le Haillan (FR); QUET, Aurélie, F-33160 Saint Medard en Jalles (FR); PAILLER, René, F-33610 Cestas (FR)
(74) Mandataire: Desormiere, Pierre-Louis
(86) Numéro de dépôt international: PCT/FR2008/052289
(87) Numéro de publication internationale: WO 2009/081006

(56) Documents cités:
- US-A1- 2004 207 133
- US-A1- 2007 172 659

## Description

### Arrière-plan de l'invention

La présente invention concerne la protection des matériaux composites thermostructuraux carbone/carbone (C/C) contre les attaques en milieu agressif.

Les matériaux composites C/C sont bien connus et utilisés pour leurs propriétés thermiques (réfractarité du carbone) et en particulier pour l'excellente tenue mécanique qu'ils présentent même à température élevée. Ces matériaux présentent toutefois l'inconvénient d'être poreux et d'être corrodables par tous les agents actifs de corrosion vis-à-vis de l'élément carbone.

Les matériaux composites C/C sont en particulier utilisés pour former des pièces destinées à être soumises à de hautes températures telles que des tuyères de moteurs-fusées, des disques de frein d'avion, des parois de réacteurs nucléaires (fission, fusion), des dispositifs de rentrée dans l'atmosphère, etc. Lors de l'utilisation de ces pièces en matériau composite C/C, il est très important d'empêcher le carbone exposé au niveau de la "surface accessible" de la pièce d'interagir avec les espèces oxydantes et surtout avec les agents corrosifs présents. Par "surface accessible", on entend toute la surface géométrique externe de la pièce, mais aussi la surface de la porosité interne du matériau qui est débouchante, c'est-à-dire la porosité accessible au milieu corrosif depuis l'extérieur.

Afin de protéger cette surface accessible du matériau, une solution bien connue consiste à faire réagir un métal fondu avec le carbone présent de manière à obtenir une couche de carbure. Le métal est choisi pour générer un carbure résistant au milieu corrosif considéré et stable à haute température comme le carbure de silicium qui est obtenu en faisant réagir le carbone du matériau avec du silicium fondu. Pour protéger le matériau C/C, on cherche à former plus particulièrement des carbures hautement réfractaires, encore appelés carbures ultra-réfractaires, qui présentent une température de fusion supérieure à 2000°C tels que le carbure de titane (TiC), le carbure de zirconium (ZrC), le carbure de niobium (NbC), le carbure d'hafnium (HfC). Ces carbures sont obtenus à partir des métaux correspondant portés à fusion en utilisant, par exemple, le procédé bien connu d'infiltration réactive de métal fondu (encore appelé procédé RMI pour "Reactive Melt Infiltration").

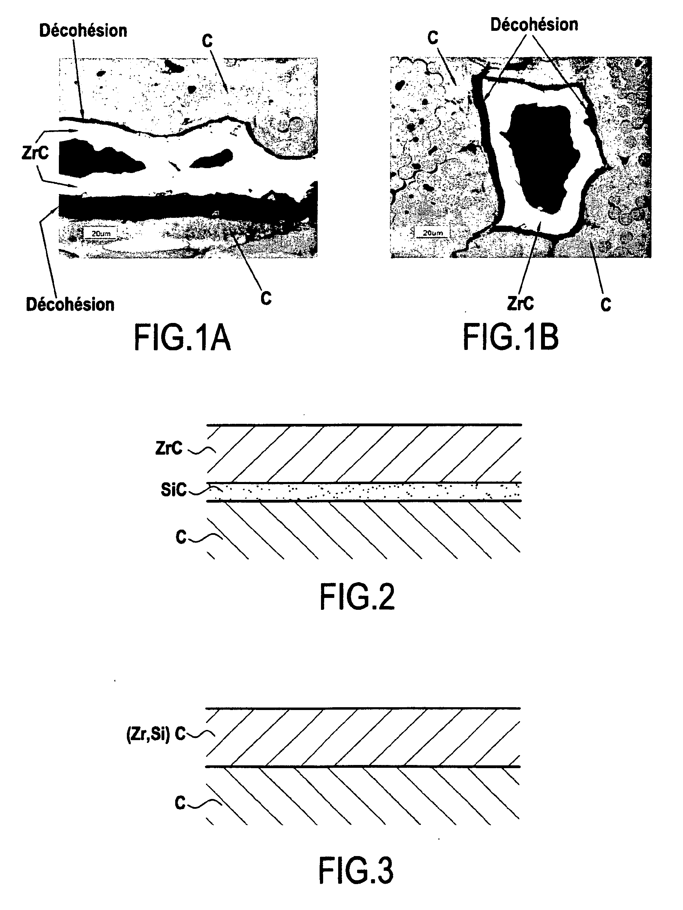

Les figures 1A et 1B illustrent le résultat obtenu après infiltration d'un matériau composite C/C avec du zirconium fondu. Comme représentée sur la portion de matériau des figures 1A et 1B, on obtient bien sur la surface de carbone accessible au zirconium fondu une couche de carbure de zirconiuym (ZrC) résultant de la réaction Zr + C → ZrC. A titre d'exemple, le document L. M. Adelsberg et al., "Kinetics. of the Zirconium-Carbon Reaction at Temperatures Above. 2000°C,", Transactions of the Metallurgical Society of AIME, 1966, n° 236, p. 972-977, décrit la réaction du zirconium avec le carbone à 2000°C environ avec formation de carbure de zirconium.

Les coupes métallographiques illustrées sur les figures 1A et 1B montrent qu'il existe un défaut de liaison entre la couche de carbure de zirconium formée et le carbone du matériau. La décohésion (correspondant aux zones en noir entre le carbone et le ZrC des figures 1A et 1B) constitue un chemin préférentiel pour le passage du ou des agents corrosifs et, par conséquent, pour l'attaque du carbone de la pièce en matériau C/C lors de ses utilisations ultérieures.

Des méthodes ont été développées pour tenter de relier la couche de carbure avec le carbone du matériau. Le document US 2004/0207133 propose notamment de réaliser, après une première infiltration réactive RMI avec le métal réfractaire pour former le carbure souhaité, une deuxième infiltration réactive RMI avec du silicium seul dans le but de combler les espaces résultants de la décohésion avec une couche de carbure de silicium secondaire obtenue par réaction entre le silicium fondu et le carbone accessible. Toutefois, outre le fait que cette méthode nécessite un deuxième traitement à haute température du matériau entraînant un surcoût dans sa fabrication, la Déposante a pu vérifier que, même en formant une telle couche de SiC après formation du carbure, il n'est pas possible d'obtenir une bonne liaison entre les différentes couches en particulier en termes de continuité structurale et thermique.

La Déposante a observée que la décohésion entre le carbone du matériau composite et le carbure se produit lors du refroidissement du métal fondu déposé sur et dans le matériau. La différence de coefficient de dilatation thermique entre le métal fondu et le matériau composite pourrait être au moins en partie responsable de cette décohésion.

### Objet et résumé de l'invention

L'invention a pour but de fournir un procédé permettant de former, en une seule opération de traitement, une couche de carbure ultra-réfractaire sur le carbone accessible d'un matériau composite C/C, et ce sans décohésion entre le carbone du matériau composite C/C et le carbure formé.

Ce but est atteint avec un procédé comprenant une étape consistant à placer le matériau composite C/C en contact avec une composition réactive sous forme solide contenant une proportion atomique supérieure ou égale à 1/3 et inférieure ou égale à 95% d'un métal précurseur d'un carbure déterminé le carbure ayant une température de fusion supérieure à 2000°C (carbure ultra-réfractaire) et une proportion atomique de silicium supérieure ou égale à 5% et inférieure ou égale 2/3, et une étape consistant à imprégner la surface accessible du matériau composite C/C avec la composition réactive fondue par application d'un traitement thermique réalisé à une température supérieure ou égale à la température de fusion dudit métal précurseur d'un carbure déterminé de manière à former une première phase de carbure de silicium en contact avec le matériau composite C/C et une deuxième phase de carbure déterminé. Ces phases de carbure sont formées uniquement par réaction avec le carbone du matériau.

Ainsi, en utilisant une composition comprenant au moins 5% de silicium avec le métal précurseur de carbure et faisant réagir cette composition avec le carbone du matériau traité à une température supérieure à la température de fusion du métal, on forme en une seule opération deux phases de carbure avec une première phase de carbure de silicium sur le carbone suivie d'une seconde phase d'un carbure ultra-réfractaire. Grâce à la formation d'une phase de carbure de silicium qui adhère parfaitement au carbone du matériau, on évite l'apparition de décohésion au niveau de la surface du carbone traité qui ne peut plus être atteinte par les agents corrosifs ou oxydants.

En outre, les couches de carbure de silicium et de carbure ultra-réfractaire obtenues forment une double couche continue depuis le carbone du matériau jusqu'à la couche de carbure ultra-réfractaire. Cette continuité est à la fois structurale et thermique. La continuité thermique permet notamment d'accroître la résistance du matériau à la température.

Selon un aspect particulier de l'invention, la composition réactive comprend un métal choisi parmi au moins le titane, le zirconium, le niobium, le hafnium, le tantale et le tungstène.

Selon un autre aspect de l'invention, le procédé de l'invention peut être avantageusement mis en oeuvre avec des compositions réactives à base de composés définis tels qu'un disiliciure de métal choisi parmi au moins TiSi₂, ZrSi₂, NbSi₂, HfSi₂, TaSi₂ et WSi₂.

Selon encore un autre aspect de l'invention, la composition réactive peut comprendre en outre un troisième élément. Ce troisième élément peut être choisi pour conférer au matériau des propriétés particulières. Le troisième élément peut notamment être choisi pour permettre lors d'une oxydation ultérieure la formation d'une couche protectrice aux caractéristiques particulières. Dans ce cas, le troisième élément peut être de l'aluminium. On peut également choisir un élément tel que le calcium ou l'yttrium qui permet de stabiliser les produits réactionnels issus du métal précurseur de carbure ultra-réfractaire.

La composition réactive peut également contenir en outre un additif de fusion non réactif avec le carbone et ayant une température de fusion inférieure à celle dudit métal précurseur de carbure tel que de l'étain ou du cuivre.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- les figures 1A et 1B sont des microphotographies montrant un matériau composite C/C traité avec du zirconium fondu;
- la figure 2 montre la formation d'une couche de carbure ultra-réfractaire obtenue conformément au procédé de l'invention;
- la figure 3 est un exemple schématique d'un résultat théorique après infiltration d'un matériau composite C/C avec une composition fondue de zirconium et de silicium;
- la figure 4 est une microphotographie montrant le résultat obtenu après infiltration d'un matériau composite C/C avec une composition de ZrSi₂ chauffée à 1650°C;
- les figures 5 et 6 sont respectivement une microphotographie et un schéma montrant le résultat obtenu après infiltration d'un matériau composite C/C avec une composition de ZrSi₂ chauffée à 1900°C conformément au procédé de l'invention;
- la figure 7 est une microphotographie montrant la formation d'une couche de carbure de titane obtenue conformément au procédé de l'invention;
- la figure 8 est une microphotographie montrant le résultat obtenu après infiltration d'un matériau composite C/C avec une composition de Zr-Al_{10%at}-Si_{10%at} chauffée à 1900°C conformément au procédé de l'invention;
- la figure 9 est une microphotographie montrant le résultat obtenu après infiltration d'un matériau composite C/C avec une composition de Ti-Al_{6%at}-V_{4%at} chauffée à 1700°C.

### Description détaillée de modes de réalisation

Le procédé de la présente invention propose une solution pour former au moins une couche de carbure hautement réfractaire sur la "surface accessible" d'une pièce en matériau composite carbone/carbone (C/C). Par "surface accessible", on entend la surface géométrique externe de la pièce, mais aussi la surface de la porosité interne du matériau qui est débouchante, c'est-à-dire la porosité accessible depuis l'extérieur. Comme décrit ci-après en détail, c'est cette surface accessible que l'on va mettre en contact avec une composition réactive fondue propre à l'invention pour obtenir une réaction entre le ou les métaux présents dans la composition et le carbone accessible aussi bien à l'extérieur qu'à l'intérieur du matériau C/C.

La fabrication de pièces en matériau composite C/C est bien connue. Elle comprend généralement la réalisation d'une préforme fibreuse carbone dont la forme est voisine de celle de la pièce à fabriquer et la densification de la préforme par la matrice carbone.

La préforme fibreuse constitue le renfort de la pièce dont le rôle est essentiel vis-à-vis des propriétés mécaniques. La préforme est obtenue à partir de textures fibreuses : fils, câbles, tresses, tissus, feutres... La mise en forme est réalisée par bobinage, tissage, empilage, et éventuellement aiguilletage de strates bidimensionnelles de tissu ou de nappes de câbles...

La densification du renfort fibreux peut être réalisée par voie liquide (imprégnation par une résine précurseur de la matrice carbone et transformation par réticulation et pyrolyse, le processus pouvant être répété) ou par voie gazeuse (infiltration chimique en phase vapeur de la matrice carbone).

A ce stade de fabrication, le matériau C/C constitutif de la pièce présente toujours une porosité en partie accessible depuis l'extérieur.

Une fois la pièce en matériau composite C/C réalisée, on imprègne celle-ci avec une composition réactive fondue contenant au moins, conformément à la présente invention, entre 5% et 2/3, en proportion ou pourcentage atomique, de silicium et entre 1/3 et 95 % d'un métal permettant de former par réaction avec le carbone du matériau de la pièce un carbure hautement réfractaire ou ultra-réfractaire, c'est-à-dire ayant une température de fusion supérieure à 2000°C. Parmi les métaux aptes à former un tel carbure, la composition selon l'invention peut notamment contenir un des métaux suivants: titane, zirconium, niobium, hafnium, tantale et tungstène.

Des essais menés par la Déposante et décrits ci-après ont montré que des compositions contenant une quantité importante de silicium telles que les disiliciures de métal précurseur de carbure ultra-réfractaire permettent également d'obtenir les mêmes résultats, à savoir une continuité structurale et thermique entre le carbone du matériau, la couche de SiC et la couche de carbure. Cela permet en particulier de pouvoir mettre en oeuvre le procédé de l'invention en utilisant en tant que composition réactive des composés définis comme par exemple dans le cas du zirconium du disilicate de zirconium (ZrSi₂) ou du disiliciure de titane (TiSi₂).

Pour imprégner la surface accessible du matériau composite C/C avec la composition réactive de l'invention, on utilise la méthode bien connue d'infiltration réactive (encore appelée méthode RMI pour "Reactive Melt Infiltration") qui consiste à imprégner le matériau C/C de la pièce avec la composition dans un état fondu. A cet effet, la pièce en matériau composite C/C peut être placée dans un creuset en graphite en disposant sur sa partie supérieure la composition sous forme solide, par exemple sous forme de poudre. Dans les cas où il est difficile de faire tenir la composition sous forme de poudre sur la pièce avant d'initier le traitement thermique, les grains de poudre peuvent être liés au moyen d'une résine fugitive ayant un taux de coke nul. Une fois la composition sous forme solide disposée sur la pièce, un traitement thermique est alors appliqué pour faire fondre la composition qui, par contact avec la surface externe et infiltration dans la porosité de la pièce, imprègne la surface accessible du matériau.

Selon l'invention, il n'y a pas d'apport externe de carbone de sorte que les couches ou phases de SiC et de carbure ultra-réfractaire sont formées uniquement par réaction avec le carbone du matériau composite C/C, ce qui permet notamment de former la couche/phase de SiC en contact continu avec la surface accessible du matériau et d'éviter ainsi la décohésion entre le matériau et les couches/phases de carbone. A cet effet, la composition réactive sous forme solide utilisée dans l'invention ne contient pas de carbone ou de précurseur de celui-ci. En outre, lorsque la composition réactive est appliquée avec un liant, on utilise une résine fugitive à taux de coke nul comme indiqué précédemment qui s'évapore suffisamment rapidement lors du traitement thermique pour ne pas permettre au carbone éventuellement présent dans celle-ci de réagir avec la composition réactive. A cet effet, on peut utiliser, par exemple, comme en tant que résine fugitive l'alcool polyvinylique, le polyméthacrylate de méthyle (PMMA), l'eau, etc.

Conformément à la présente invention, le traitement thermique est réalisé à une température supérieure à la température de fusion du métal précurseur de carbure ultra-réfractaire utilisé dans la composition réactive. La Déposante a en effet observé que si la température du traitement thermique est supérieure à la température de fusion de la composition réactive utilisée mais inférieure à la température de fusion propre du métal de la composition, on n'obtient pas la formation de deux phases distinctes de carbure comme décrit ci-après.

La figure 2 illustre le résultat obtenu après une infiltration réactive d'une pièce en matériau composite C/C par une composition réactive contenant du zirconium et du silicium (Zr-Si), la composition ayant été fondue à une température supérieure à la température de fusion propre du zirconium. Cette figure montre qu'en une seule opération de traitement, c'est-à-dire en une seule infiltration réactive, on obtient au moins deux couches de carbure en deux phases distinctes, à savoir une couche de carbure de silicium (SiC) adhérente au contact du carbone du matériau composite C/C de la pièce et une couche de carbure de zirconium (ZrC) au-dessus de la couche de SiC.

L'obtention de ces deux couches de carbure en deux phases distinctes est surprenante dans la mesure où les mécanismes réactionnels habituels conduisent en général à la formation d'une seule phase de carbure mixte, à savoir dans l'exemple ici considéré un carbure mixte de zirconium et de silicium ((Zr, Si)C) comme illustré sur la figure 3.

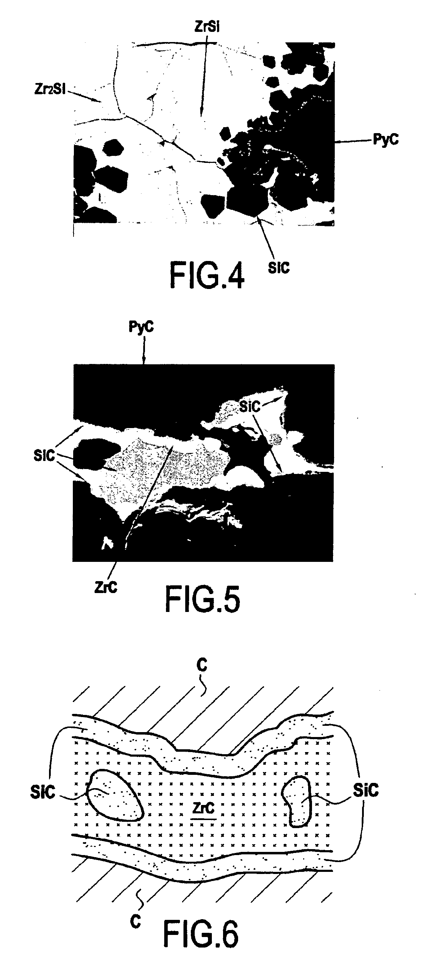

La Déposante a réalisé des essais qui montrent qu'avec du disilicure de zirconium (ZrSi₂) qui fond à 1520°C, le traitement thermique doit être réalisé à une température supérieure à 1852°C, correspondant à la température de fusion du zirconium seul, pour obtenir une phase SiC au plus près du carbone du matériau puis une phase ZrC au dessus de la phase SiC. Plus précisément, la Déposante a traité un matériau composite C/C avec du ZrSi₂, le traitement thermique de fusion du composé comprenant deux paliers à des températures différentes, à savoir un premier palier de 30 minutes à 1650°C puis un second palier de trente minutes à 1900°C. A l'issue du premier palier à 1650°C, du SiC est formé mais seulement sous forme de grains discontinus comme illustré sur la figure 4, ce qui ne permet pas d'assurer une continuité entre les différentes phases. En outre le zirconium n'est présent que sous forme de siliciures (ZrSi ou Zr₂Si). En revanche, après le palier à 1900°C, on observe uniquement deux phases SiC et ZrC comme illustré sur la figure 5. Ces deux phases étant séquencées toujours dans le même ordre, à savoir une couche de SiC continue et adhérente au carbone du matériau et une phase ZrC dans laquelle on retrouve le silicium en excès sous forme de plages de SiC dans le ZrC (figure 6).

De même, dans le cas de l'utilisation de disiliciure de titane (TiSi₂) en tant composition réactive, la température de fusion de ce composé est de 1540°C alors que la température de fusion du titane seul est de 1687°C. Si l'on chauffe la composition réactive à base de TiSi₂ seulement à une température supérieure à 1540°C mais inférieure à 1687°C, on obtient un carbure mixte Ti₃SiC₂ mais pas deux phases distinctes de carbure avec la phase SiC au plus près du carbone du matériau C/C.

Si on se réfère aux diagrammes de phases bien connus des mélanges binaires métal-Si et plus particulièrement aux diagrammes binaires d'un système comprenant un métal tel que Zr, Ti, Nb, Hf, Ta et W et une proportion atomique de silicium variant entre 0% et 100% comme ceux représentés dans l'ouvrage de Max Hansen intitulé "Constitution Of Binary Alloys", McGraw-Hill (1958), on constate qu'il n'existe pas de mélange eutectique à 5% de silicium (proportion atomique). Pourtant, en infiltrant un matériau composite C/C avec, par exemple, une composition contenant une proportion atomique de 5% de silicium et de 95% de zirconium ou de titane, composition pour laquelle il n'y a pas de mélange eutectique avec ce pourcentage de silicium, et en chauffant cette composition à une température supérieure à la température de fusion du zirconium ou du titane conformément au procédé de l'invention, on obtient bien deux phases séquencées SiC et ZrC avec une continuité depuis le carbone du matériau jusqu'à la couche ZrC.

Par ailleurs, même si on utilise une proportion atomique minimale de silicium pour la quelle il existe un mélange eutectique, comme avec une proportion atomique de 8,8% de silicium dans une composition Zr-Si, une infiltration réalisée à la température de fusion du mélange, ici 1600°C, ne permet pas non plus d'obtenir deux phases distinctes continues et séquencées de SiC et ZrC.

Par conséquent, en utilisant au moins 5% de silicium avec le métal précurseur du carbure hautement réfractaire que l'on souhaite obtenir et si l'on chauffe cette composition à une température supérieure ou égale à la température de fusion propre du métal, on forme deux phases distinctes de carbure, avec la phase SiC directement au contact du carbone accessible du matériau. La phase carbure ultra-réfractaire n'étant plus directement en contact avec le carbone du matériau, on évite la formation de zones de décohésion entre le carbone du matériau et le carbure ultra-réfractaire qui se produit lorsque l'on imprègne le matériau C/C avec seulement le métal précurseur de carbure réfractaire. En supprimant ainsi les passages préférentiels pour les attaques ultérieures par des agents corrosifs, on augmente la protection du carbone du matériau C/C.

En outre, bien que l'utilisation de la composition réactive selon l'invention avec un matériau C/C conduit à la formation successive de deux couches respectivement de SiC et du carbure ultra-réfractaire, on obtient un système multicouche continu depuis le carbone du matériau jusqu'à la couche de carbure ultra-réfractaire. Cette continuité est à la fois structurale et thermique. La continuité structurale empêche notamment les espèces corrosives d'atteindre le carbone du matériau tandis que la continuité thermique permet d'accroître la résistance du matériau à la température. Une mesure de diffusivité thermique à été réalisé sur un matériau C/C après une infiltration réactive de celui-ci par une composition de ZrSi₂ conformément au procédé de l'invention. Avant infiltration, le matériau présente une diffusivité thermique de 284 mm²/s. Après infiltration, c'est-à-dire après formation des phases de carbure de silicium et de carbure de zirconium sur le matériau, ce dernier présente une diffusivité thermique de 292 mm²/s. Ces mesures démontrent, que malgré la formation des deux phases de carbure, la continuité thermique est bien maintenue.

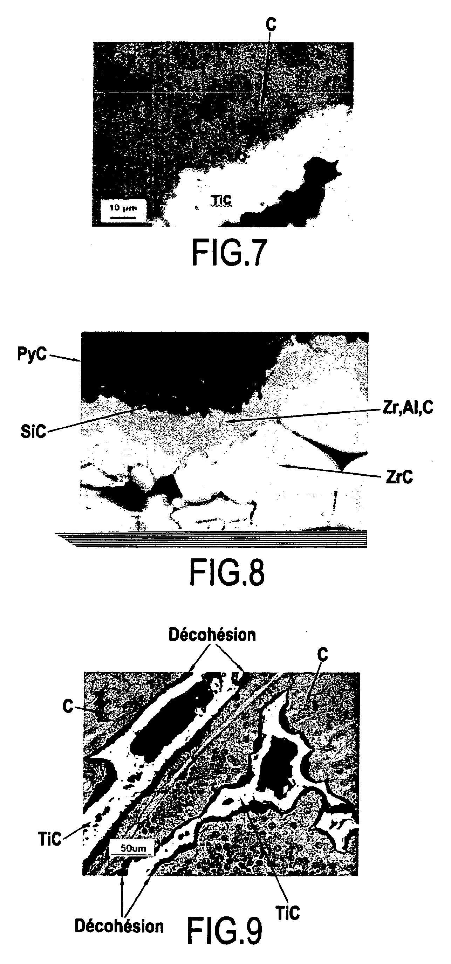

Par ailleurs, des essais avec des métaux précurseurs de carbures ultra-réfractaires autres que le zirconium ont également donné de bons résultats au niveau de la continuité de la liaison entre le carbone du matériau et le carbure formé. La figure 7 montre le résultat obtenu après infiltration réactive d'un matériau composite C/C avec une composition comprenant du titane et 20% silicium (en pourcentage atomique), la composition ayant été chauffée à 1700°C. On observe que la couche de SiC est bien ancrée au carbone du matériau et assure ainsi une continuité entre le carbure de titane TiC et le carbone.

La composition réactive utilisée dans la présente invention, peut contenir, en outre du silicium et du métal précurseur de carbure ultra-réfractaire, un ou plusieurs éléments actifs supplémentaires.

La figure 8 montre le résultat obtenu après une infiltration réactive d'un matériau composite C/C par une composition Zr-Al_{10%at}-Si_{10%at}, le traitement thermique pour fondre la composition ayant été réalisé à 1900°C. Après une telle infiltration, on observe sur le carbone accessible du matériau la formation d'un système de trois couches continues comprenant, dans l'ordre à partir du carbone, une couche de SiC liée au carbone du matériau, une couche de carbure mixte (Zr, Al)C et une couche de ZrC. On constate que l'addition d'un troisième élément, ici l'aluminium, forme un carbure mixte avec le métal précurseur du carbure, ici du zirconium.

De même que lors de l'utilisation d'un métal précurseur de carbone seul, c'est-à-dire sans silicium, l'utilisation d'un alliage contenant un métal précurseur et un élément supplémentaire autre que le silicium ne permet pas d'obtenir une couche de carbure ultra-réfractaire sans décohésion. La Déposante notamment réalisé un essai consistant à infiltrer un matériau composite C/C avec un alliage de titane Ti-Al_{6%at}-V_{4%at} ne contenant pas de silicium, le traitement thermique pour fondre la composition ayant été réalisé à 1700°C soit une température supérieure à la température de fusion du titane (1687°C). Le résultat de cet essai illustré à la figure 9 montre qu'il y a bien une formation de carbure de titane (TiC) mais avec une décohésion entre le TiC et le carbone du matériau.

Le choix du troisième élément dans la composition réactive utilisée dans le procédé de l'invention peut être en particulier déterminé par des caractéristiques ou propriétés particulières que l'on souhaite conférer au matériau C/C. Dans le cas par exemple d'une pièce en matériau composite C/C traitée avec un alliage Zr-Al_{10%at}-Si_{10%at} comme décrit précédemment en relation avec la figure 8, l'utilisation de cette pièce à haute température, par exemple dans un moteur-fusée ou dans un bouclier de rentrée atmosphérique, provoquera l'oxydation du carbure de zirconium qui générera une couche d'oxyde réfractaire de zircone (ZrO₂) tandis que le troisième élément, à savoir Al, s'oxydera également pour former de l'alumine (Al₂O₃). Aussi, dans ce cas, la couche protectrice obtenue lors de l'oxydation se situe dans le système Al₂O₃-ZrO₂ qui possède ses propres caractéristiques en comparaison, par exemple, avec une couche protectrice formée seulement de zircone (ZrO₂).

Par conséquent, en utilisant une composition ternaire dans le procédé de l'invention et en choisissant spécifiquement le troisième élément de cette composition, il est possible d'agir non seulement sur la nature et les caractéristiques du carbure obtenu directement après l'infiltration réactive du matériau avec la composition réactive mais aussi celles des produits réactionnels dérivés, comme ceux formés lors d'une oxydation ultérieure.

A titre d'exemple, la zircone (ZrO₂) qui se forme lors de l'oxydation du carbure de zirconium est connue comme étant un bon isolant réfractaire. Toutefois, elle présente le défaut de posséder un changement de phase martensitique avec un changement de volume brutal qui entraîne des ruptures spontanées dans couche de zircone. Afin de pallier ce problème, il est connu d'associer à la zircone de l'oxyde d'yttrium ou de calcium. Dans le cadre de l'invention, il est alors possible d'utiliser un alliage Zr-Si_{≥5%at}.-Y ou Zr-Si_{≥5%at}.-Ca pour former conformément au procédé de l'invention une couche de SiC puis une couche de ZrC sur le carbone du matériau, mais avec la présence de l'élément Y ou Ca dans la couche de ZrC qui, lors d'une oxydation ultérieure, génèrera simultanément de la zircone avec son oxyde stabilisant, c'est-à-dire ZrO₂+Y₂O₃ ou ZrO₂+CaO.

Comme décrit précédemment, le procédé de l'invention met en oeuvre une réaction entre le carbone présent sur la surface accessible d'une pièce en matériau composite C/C avec une composition réactive contenant un métal précurseur d'un carbure déterminé, au moins 5% de silicium et, éventuellement, un ou plusieurs éléments permettant de modifier la composition du carbure obtenu et des produits formés ultérieurement lors par exemple de l'utilisation de la pièce en environnement oxydant. Le traitement thermique permettant de faire fondre la composition et permettre sa réaction avec le carbone doit être réalisé à une température supérieure à la température de fusion du métal précurseur du carbure ultra-réfracatire.

La composition réactive fondue doit pouvoir être mise en contact avec le carbone du matériau non seulement présent en surface de la pièce mais aussi avec le carbone exposé dans la porosité ouverte, c'est-à-dire le carbone présent à l'intérieur de la pièce et accessible depuis sa surface externe. Les méthodes de mise en oeuvre d'une infiltration réactive d'un matériau avec un alliage fondu sont bien connues. Elles peuvent consister notamment comme décrit plus haut à placer la pièce en matériau composite directement en contact avec la composition réactive sous forme solide puis à faire fondre l'alliage par traitement thermique.

L'écoulement de la composition réactive fondue dans le matériau peut être maîtrisé et canalisé si nécessaire par l'application localisé d'une composition non réactive anti-mouillante, par exemple à base nitrure de bore (BN). Une ou plusieurs faces externes d'une pièce en matériau composite peuvent par exemple être recouvertes d'une telle composition anti-mouillante afin d'empêcher la composition réactive fondue de déborder à l'extérieur de la pièce, l'obligeant ainsi à bien imprégner le matériau dans toute son épaisseur.

Selon une autre variante de mise en oeuvre du procédé de l'invention, on peut utiliser un additif de fusion non réactif avec le carbone qui est destiné à abaisser la température de fusion de l'alliage ainsi que la température de réaction. Parmi les additifs connus, on utiliser notamment de l'étain qui fond à basse température et présente une faible pression de vapeur. L'étain est en outre connu pour dissoudre de nombreux éléments dont le zirconium, le silicium et le titane. Il est donc bien adapté pour être incorporé dans la composition réactive de l'invention et pour jouer ainsi le rôle d'agent de flux favorisant le transport des espèces de la composition (notamment le métal précurseur de carbure et le silicium) jusqu'à la zone de réaction avec le carbone exposé à traiter. Le cuivre constitue également un autre exemple d'additif de fusion apte à agir en tant qu'agent de flux dans le procédé de l'invention.

## Revendications

1. Procédé de réalisation d'au moins une couche de carbure réfractaire sur la surface accessible d'un matériau composite C/C **caractérisé en ce qu'**il comprend:
- une étape consistant à placer le matériau composite en contact avec une composition réactive sous forme solide contenant une proportion atomique supérieure ou égale à 1/3 et inférieure ou égale à 95% d'un métal précurseur d'un carbure déterminé le carbure ayant une température de fusion supérieure à 2000°C, et une proportion atomique de silicium supérieure ou égale à 5% et inférieure ou égale 2/3, et
- une étape consistant à imprégner la surface accessible du matériau composite C/C avec la composition réactive fondue par application d'un traitement thermique réalisé à une température supérieure ou égale à la température de fusion dudit métal précurseur d'un carbure déterminé de manière à former une première phase de carbure de silicium en contact avec le matériau composite C/C et une deuxième phase de carbure déterminé,
et **en ce que** lesdites phases de carbure sont formées uniquement par réaction avec le carbone du matériau.

2. Procédé selon la revendication 1, **caractérisé en ce que** la composition réactive comprend un métal choisi parmi au moins le titane, le zirconium, le niobium, le hafnium, le tantale et le tungstène.

3. Procédé selon la revendication 1 ou 2, **caractérisé en ce que** la composition réactive comprend un disiliciure de métal choisi parmi au moins TiSi₂, ZrSi₂, NbSi₂, HfSi₂, TaSi₂ et WSi₂.

4. Procédé selon l'une quelconque des revendications 1 à 3, **caractérisé en ce que** la composition réactive comprend en outre un troisième élément.

5. Procédé selon la revendication 4, **caractérisé en ce que** la composition réactive contient du zirconium et **en ce que** le troisième élément est choisi parmi au moins l'aluminium, le calcium et l'yttrium.

6. Procédé selon l'une quelconque des revendications 1 à 5, **caractérisé en ce que**, avant de placer le matériau composite en contact avec une composition réactive, une ou plusieurs portions externes du matériau sont recouvertes avec un agent anti-mouillant.

7. Procédé selon l'une quelconque des revendications 1 à 6, **caractérisé en ce que** la composition réactive contient en outre un additif de fusion non réactif avec le carbone et ayant une température de fusion inférieure à celle dudit métal précurseur de carbure.

8. Procédé selon la revendication 7, **caractérisé en ce que** l'additif de fusion est choisi au moins parmi l'étain et le cuivre.

## Claims

1. A method of making at least one layer of refractory carbide on the accessible surface of a C/C composite material, the method being **characterized in that** it comprises:
• a step consisting in placing the composite material in contact with a reactive composition in solid form containing an atomic proportion greater than or equal to one-third and less than or equal to 95% of a metal that is a precursor of a determined carbide, the carbide having a melting temperature higher than 2000°C, together with an atomic proportion of silicon that is greater than or equal to 5% and less than or equal to two-thirds; and
• a step consisting in impregnating the accessible surface of the C/C composite material with the reactive composition melted by applying heat treatment at a temperature higher than or equal to the melting temperature of said metal that is a precursor of a determined carbide so as to form a first phase of silicon carbide in contact with the C/C composite material, and a second phase of the determined carbide;
and **in that** said carbide phases are formed solely by reaction with the carbon of the material.

2. A method according to claim 1, **characterized in that** the reactive composition comprises a metal selected from at least: titanium, zirconium, niobium, hafnium, tantalum, and tungsten.

3. A method according to claim 1 or claim 2, **characterized in that** the reactive composition comprises a metal disilicide selected from at least: TiSi₂, ZrSi₂, NbSi₂, HfSi₂, TaSi₂, and WSi₂.

4. A method according to any one of claims 1 to 3, **characterized in that** the reactive composition further includes a third element.

5. A method according to claim 4, **characterized in that** the reactive composition contains zirconium, and **in that** the third element is selected from at least: aluminum, calcium, and yttrium.

6. A method according to any one of claims 1 to 5, **characterized in that**, prior to placing the composite material in contact with a reactive composition, one or more external portions of the material are covered in an anti-wetting agent.

7. A method according to any one of claims 1 to 6, **characterized in that** the reactive composition further contains a melting additive that does not react with carbon and that has a melting temperature that is lower than that of said carbide precursor metal.

8. A method according to claim 7, **characterized in that** the melting additive is selected from at least: tin and copper.

## Patentansprüche

1. Verfahren zur Herstellung wenigstens einer hitzebeständigen Carbid-Schicht auf der zugänglichen Fläche eines C/C-Verbundwerkstoffs, **dadurch gekennzeichnet, daß** es umfaßt:
- einen Schritt, der darin besteht, den Verbundwerkstoff mit einer reaktiven Zusammensetzung in fester Form in Kontakt zu bringen, die einen Atomanteil von mehr als oder gleich 1/3 und weniger als oder gleich 95 % eines Vorläufermetalls eines bestimmten Karbids, wobei das Carbid eine Schmelztemperatur von über 2000 °C aufweist, sowie einen Atomanteil an Silizium von mehr als oder gleich 5 % und weniger als oder gleich 2/3 enthält, und
- einen Schritt, der darin besteht, die zugängliche Fläche des C/C-Verbundwerkstoffs mit der reaktiven Zusammensetzung, die durch Anwendung einer Wärmebehandlung geschmolzen wird, welche bei einer Temperatur größer oder gleich der Schmelztemperatur des Vorläufermetalls eines bestimmten Carbids durchgeführt wird, zu imprägnieren, um eine mit dem C/C-Verbundwerkstoff in Kontakt befindliche erste Phase aus Siliziumcarbid und eine zweite Phase aus einem bestimmten Carbid zu bilden,
und daß die Carbid-Phasen einzig und allein durch Reaktion mit dem Kohlenstoff des Werkstoffs gebildet werden.

2. Verfahren nach Anspruch 1, **dadurch gekennzeichnet, daß** die reaktive Zusammensetzung ein Metall umfaßt, das wenigstens aus Titan, Zirkonium, Niobium, Hafnium, Tantal und Wolfram ausgewählt ist.

3. Verfahren nach Anspruch 1 oder 2, **dadurch gekennzeichnet, daß** die reaktive Zusammensetzung ein Metalldisilicid umfaßt, das wenigstens aus TiSi₂, ZrSi₂, NbSi₂, HfSi₂, TaSi₂ und WSi₂ ausgewählt ist.

4. Verfahren nach einem der Ansprüche 1 bis 3, **dadurch gekennzeichnet, daß** die reaktive Zusammensetzung ferner ein drittes Element umfaßt.

5. Verfahren nach Anspruch 4, **dadurch gekennzeichnet, daß** die reaktive Zusammensetzung Zirkonium enthält und daß das dritte Element wenigstens aus Aluminium, Calcium und Yttrium ausgewählt ist.

6. Verfahren nach einem der Ansprüche 1 bis 5, **dadurch gekennzeichnet, daß** vor Inkontaktbringen des Verbundwerkstoffs mit einer reaktiven Zusammensetzung ein oder mehrere äußere Abschnitte des Werkstoffs mit einem Benetzungsschutzmittel überzogen werden.

7. Verfahren nach einem der Ansprüche 1 bis 6, **dadurch gekennzeichnet, daß** die reaktive Zusammensetzung ferner ein Schmelzadditiv umfaßt, das mit dem Kohlenstoff nicht reagiert und das eine Schmelztemperatur aufweist, die unter derjenigen des Carbidvorläufermetalls liegt.

8. Verfahren nach Anspruch 7, **dadurch gekennzeichnet, daß** das Schmelzadditiv wenigstens aus Zinn und Kupfer ausgewählt ist.
